(19) Europäisches Patentamt
European Patent Office
Office européen des brevets

(11) **EP 2 352 699 B1**

(12) **FASCICULE DE BREVET EUROPEEN**

(45) Date de publication et mention
de la délivrance du brevet:
**01.03.2017 Bulletin 2017/09**

(21) Numéro de dépôt: **09760217.1**

(22) Date de dépôt: **27.10.2009**

(51) Int Cl.:
*C01B 15/029* (2006.01)    *H05H 1/24* (2006.01)

(86) Numéro de dépôt international:
**PCT/FR2009/052059**

(87) Numéro de publication internationale:
**WO 2010/049634 (06.05.2010 Gazette 2010/18)**

(54) **PROCEDE DE FABRICATION DU PEROXYDE D'HYDROGENE**

VERFAHREN ZUR HERSTELLUNG VON WASSERSTOFFPEROXID

METHOD FOR MAKING HYDROGEN PEROXIDE

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité: **28.10.2008 FR 0857309**

(43) Date de publication de la demande:
**10.08.2011 Bulletin 2011/32**

(73) Titulaires:
• **Arkema France
92700 Colombes (FR)**
• **Centre National de la Recherche Scientifique
75794 Paris Cedex 16 (FR)**
• **Université Claude Bernard
69100 Villeurbanne (FR)**

(72) Inventeurs:
• **DUBOIS, Jean-Luc
F-69390 Millery (FR)**
• **BRANDHROST, Markus
F-69007 Lyon (FR)**
• **BIANCHI, Daniel
69007 Lyon (FR)**
• **THEVENET, Frédéric
F-69800 Saint Priest (FR)**

(56) Documents cités:
FR-E- 36 087      US-A- 1 904 101
US-A- 2 022 650      US-A- 2 162 996

• **J. ZHOU, H. GUO, X. WANG, M. GUO, J. ZHAO, L.
CHEN, W. GONG: "Direct and continuous
synthesis of concentrated hydrogen peroxide by
the gaseous reaction of H2/O2 non-equilibrium
plasma" CHEM. COMMUN., 2005, pages
1631-1633, XP002532818 cité dans la demande**
• **K. MORINAGA: "The reaction of Hydrogen and
Oxygen through a Silent Electric Discharge. I. The
Formation of Hydrogen Peroxide" BULL-CHEM.
SOC. JP, vol. 35, no. 2, 1962, pages 345-348,
XP002533019 cité dans la demande**

**Description**

**Domaine de l'invention**

La présente invention concerne un procédé de préparation d'une solution de peroxyde d'hydrogène. Elle a plus particulièrement pour objet un procédé de préparation d'une solution de peroxyde d'hydrogène dans lequel un mélange comprenant hydrogène et oxygène est activé dans un réacteur de type plasma froid.

**Etat de la technique**

Le peroxyde d'hydrogène est fabriqué industriellement selon un procédé basé sur la technique d'auto-oxydation d'un dérivé anthraquinonique, comprenant une étape (a) d'hydrogénation catalytique, dans un hydrogénateur, d'une solution de travail contenant au moins un dérivé anthraquinonique en solution dans au moins un solvant organique ; suivie d'une étape (b) d'oxydation, dans un oxydeur, de la solution de travail hydrogénée au moyen d'un fluide contenant de l'oxygène, notamment au moyen de l'air et d'une étape (c) de séparation par de l'eau, dans un extracteur, du peroxyde d'hydrogène et de la solution de travail oxydée et enfin une étape (d) de recyclage vers l'hydrogénateur de la solution de travail oxydée et récupérée en (c).

La synthèse directe d'une solution aqueuse de peroxyde d'hydrogène dans un réacteur agité a été étudiée. Le réacteur comprend en général une zone aqueuse ou organique, occupée par la solution de travail (généralement solution aqueuse acide) et le catalyseur, et une zone, occupée par les gaz, située au-dessus de la zone aqueuse. Le réacteur est muni d'un système d'agitation permettant à la fois d'agiter la zone aqueuse et de disperser les gaz dans la phase aqueuse. Cette synthèse directe nécessite d'opérer à pression élevée.

Outre le réacteur agité, il a été proposé de conduire la synthèse directe de peroxyde d'hydrogène dans un réacteur tubulaire constitué d'un tube de grande longueur rempli de solution de travail dans laquelle le catalyseur est mis en suspension et l'oxygène et l'hydrogène gazeux sont injectés sous forme de petites bulles dans des proportions au-dessus de la limite inférieure d'inflammabilité du mélange hydrogène-oxygène (US 5194242). La sécurité d'un tel procédé n'est assurée qu'à la condition de maintenir les réactifs gazeux dans le réacteur sous forme de petites bulles. Selon le document US 5641467, celles-ci ne peuvent être obtenues qu'avec une grande vitesse de circulation de la solution de travail.

Il est également connu de faire réagir de l'hydrogène et de l'oxygène à pression atmosphérique à l'aide d'une décharge électrique dans un plasma hors équilibre, plus connue sous la dénomination « plasma froid » (B.K. Morinaga, Bull-Chem. Soc. Jp , 1962, 32, p. 345). Plus récemment, J. Zhou et al. (Chem. Commun. 2005, p. 1631-1633) ont activé le mélange gazeux constitué d'hydrogène et d'oxygène à température ambiante à l'aide d'un système de décharge à barrière diélectrique.

Par ailleurs, l'étude de B. Dodet et al. (J. Adv. Oxid. Technol. Vol. 8 No. 1, 2005) porte sur la préparation du peroxyde d'hydrogène dans une phase après décharge d'un système de décharge électrique barrière à pression atmosphérique et température ambiante dans un milieu comprenant de l'oxygène, de l'argon et de la vapeur d'eau.

Dans la demande WO2008/025917 est décrit un procédé de fabrication de peroxyde d'hydrogène par activation d'un mélange constitué d'eau, d'oxygène et d'argon par plasma froid.

Le brevet US 2,022,650 porte sur un procédé de fabrication de peroxyde d'hydrogène réalisé aux alentours de la température ambiante, la température des gaz étant de 15 à 25°C. Le réacteur n'est pas refroidi et, à plus forte raison, aucune partie du réacteur est à une température inférieure à 15°C.

On associe généralement le plasma froid à un milieu gazeux ionisé à faible température et pression atmosphérique. Le plasma froid est produit dans une enceinte (« réacteur plasma froid ») confinée généralement à pression atmosphérique ou sous vide partiel plus ou moins poussé, dans laquelle on introduit le gaz « plasmagène » à qui on transfère de l'énergie par le biais d'une décharge électrique contrôlée. Le gaz plasmagène peut être un mélange qui peut s'ioniser facilement, devenant ainsi conducteur de l'électricité. Quant à la décharge électrique, elle s'obtient soit entre deux électrodes (décharge sous champ électrique, luminescente à basse pression ou couronne à pression atmosphérique), soit par un dispositif sans électrodes, sous champ électromagnétique variable de type hautes fréquences (par exemple à 13,56 MHz) ou micro-ondes (par exemple 2,45 GHz).

Cependant, ces procédés de fabrication présentent un rendement de fabrication insuffisant et/ou une faible sélectivité en peroxyde d'hydrogène, ce qui empêche jusqu'à ce jour l'utilisation industrielle de ce procédé.

**Résumé de l'invention**

L'invention a pour objet un procédé de fabrication du peroxyde d'hydrogène comprenant une étape au cours de laquelle un mélange gazeux comprenant du dihydrogène (ci-après hydrogène) et du dioxygène (ci-après oxygène) est activé dans un réacteur plasma froid, dans laquelle au moins une partie du réacteur est refroidie à une température inférieure à 15°C, plus préférentiellement comprise dans la gamme allant de -14 à 14°C, tout préférentiellement de -10 à 10°C.

De manière surprenante, le procédé de fabrication selon l'invention permet d'obtenir une solution aqueuse de peroxyde d'hydrogène avec un bon rendement et/ou une bonne sélectivité.

Le réacteur peut avantageusement comprendre de l'eau, cette eau pouvant être placée sous forme liquide au fond du réacteur ou être injectée sous forme de vapeur d'eau.

Avantageusement, l'énergie spécifique utilisée sur le gaz dans le réacteur plasma pour l'activer est comprise dans la gamme allant de 125 à 3000J/L.

Préférentiellement, le réacteur à plasma froid est un réacteur plasma à décharge avec électrodes. Préférentiellement, le réacteur plasma à décharge avec electrodes est à barrière diélectrique. Selon un mode de réalisation, le réacteur plasma à décharge à barrière diélectrique est une électrode à double enveloppe dans laquelle circule une solution réfrigérée à une température inférieure à 15°C.

Selon l'invention, le réacteur comprend de manière préférée un solide faiblement conducteur sous forme de poudre, de grains ou de fibres, de préférence des fibres de quartz. De préférence, la zone plasma est partiellement ou totalement remplie par ce solide.

Selon l'invention, la composition du mélange gazeux introduite lors de l'étape d'activation a préférentiellement une teneur en hydrogène inférieure à 3,2 % en volume ou en oxygène inférieure à 5 % en volume.

Dans cette gamme de compositions, on évite le risque d'explosion dans le réacteur plasma.

## Description de la Figure annexée

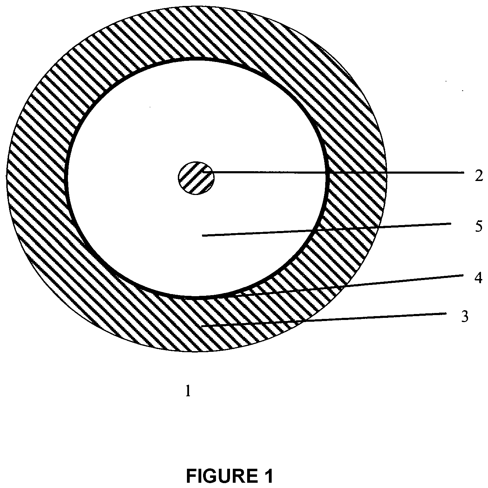

La Figure 1 présente une coupe transversale d'un exemple de réacteur plasma froid couronne (1), c'est à dire un réacteur comprenant une électrode cylindrique. Une électrode centrale (2) est connectée au générateur plasma haute tension situé à l'extérieur du réacteur. Une contre-électrode cylindrique (3) est placée tout autour de l'électrode centrale : entre l'électrode centrale et la surface intérieure de la contre-électrode cylindrique (4) se trouve la zone plasma (5), c'est à dire la zone dans laquelle le plasma est activé.

## Description détaillée de l'invention

L'invention a pour objet un procédé de fabrication du peroxyde d'hydrogène comprenant une étape au cours de laquelle un mélange gazeux comprenant de l'hydrogène et de l'oxygène est activé dans un réacteur plasma froid, dans laquelle au moins une partie du réacteur est refroidie à une température inférieure à 15°C, plus préférentiellement comprise dans la gamme allant de -14 à 14°C, tout préférentiellement de -10 à 10°C, par exemple de -3 à 3°C. La température peut être supérieure à -15°C, par exemple supérieure à 0°C.

Lorsque les espèces sont activées dans le réacteur plasma, on forme principalement un mélange d'eau et de peroxyde d'hydrogène.

Le mélange gazeux introduit comprend de l'oxygène, de l'hydrogène et éventuellement de la vapeur d'eau. Ce mélange peut également comprendre tout autre type de gaz, comme par exemple un gaz inerte tel que l'argon ou l'hélium.

Avantageusement, le mélange de gaz peut être refroidi à l'aide d'un échangeur de chaleur avant son introduction dans le réacteur plasma.

Le réacteur plasma froid peut être tout type de réacteur susceptible de créer un plasma du mélange d'oxygène et d'hydrogène introduit. Les réacteurs plasmas de type électromagnétique (c'est à dire des réacteurs plasmas sans électrodes) peuvent être utilisés, par exemple micro-ondes ou haute fréquence. Les réacteurs plasma à décharge électrique avec électrodes peuvent également être utilisés, par exemple ceux à champ électrique, à décharge luminescente, à décharge couronne ou les décharges avec barrière diélectrique.

Avantageusement, on utilise un réacteur avec électrodes. De manière préférée, il s'agit d'un réacteur à décharge avec barrière diélectrique.

Pour former la barrière diélectrique, on place entre les électrodes un matériau faiblement conducteur. Par solide faiblement conducteur, on entend dans la présente demande un solide présentant une conductivité électrique inférieure à $10^{-2}$ S.m$^{-1}$, préférentiellement comprise entre $10^{-22}$ et $10^{-5}$ S.m$^{-1}$. Ce matériau ne doit pas se dégrader sous l'effet du plasma.

On peut ainsi recouvrir la ou les électrodes d'une gaine en verre par exemple de type « Pyrex® », de quartz ou de silice. Selon une variante, le matériau faiblement conducteur peut être déposé directement sur la ou les électrodes, par exemple par technique d'imprégnation et de dépôt. Par exemple, on peut déposer sur les électrodes de l'oxyde de silicium ($SiO_2$) ou des oxydes de métaux tels que l'oxyde d'aluminium ($Al_2O_3$) ou l'oxyde de titane ($TiO_2$). De manière toute préférée, les deux électrodes sont recouvertes d'une barrière diélectrique.

Le rendement en peroxyde d'hydrogène est amélioré lorsque au moins une électrode est recouverte du matériau faiblement conducteur, en comparaison avec le cas où aucune électrode n'en est recouverte.

**EP 2 352 699 B1**

On peut refroidir une partie du réacteur par tous les moyens connus, par exemple en utilisant un échangeur de chaleur.

Selon un mode de réalisation, lorsque le plasma est à décharge électrique avec électrodes, la partie du réacteur qui est refroidie est au moins une des électrodes. Dans le cas où le plasma est à décharge avec barrière diélectrique, on peut par exemple utiliser une électrode à double enveloppe en verre dans laquelle circule une solution, de préférence saline, qui permet de refroidir une partie du réacteur. Cette solution est refroidie à une température inférieure à 15°C, plus préférentiellement comprise dans la gamme allant de -14 à 14°C, tout préférentiellement de -10 à 10°C, par exemple de -3 à 3°C. La température peut être supérieure à -15°C, par exemple supérieure à 0°C. La solution saline peut avantageusement avoir une concentration comprise dans la gamme allant de 5 à 100g/L. Préférentiellement, la solution saline est une solution aqueuse de NaCl.

Avantageusement, l'énergie spécifique utilisée sur le gaz dans le réacteur plasma pour l'activer est comprise dans la gamme allant de 125 à 3000J/L.

L'énergie spécifique ($E_{sp}$) est donnée en utilisant la relation suivante :

$$E_{sp} = P/Q$$

avec P représentant la puissance imposée par le générateur plasma et Q représentant le débit du mélange des gaz à l'intérieur du réacteur.

Avantageusement, le réacteur à plasma froid peut comprendre dans la zone plasma un solide faiblement conducteur sous forme de poudre, de grains ou de fibres. Préférentiellement, la surface spécifique du solide faiblement conducteur est avantageusement supérieure à 0,1 $m^2$/g, préférentiellement comprise dans la gamme allant de 1 à 100 $m^2$/g. Dans le cadre de la présente demande, la surface spécifique est mesurée par méthode BET dans l'article de S. Brunauer P. H. Emmett, E. Teller, Adsorption of gases on multimolecular Layers, dans le Journal of American Chemical Society, 1938, 60, Pages 309-319. Préférentiellement, le solide faiblement conducteur est choisi parmi les fibres de quartz ou les fibres de verre. On peut avantageusement déposer sur ces fibres de quartz une couche d'oxyde de silicium ($SiO_2$) ou d'oxydes de métaux tels que l'oxyde d'aluminium ($Al_2O_3$) ou l'oxyde de titane ($TiO_2$).

Avantageusement, la pression à l'intérieur du réacteur lors de l'étape d'activation par plasma est comprise dans la gamme allant de 0,001 à 1 MPa, de préférence à pression atmosphérique.

On peut récupérer le peroxyde d'hydrogène sous forme gazeuse et/ou sous forme d'une solution aqueuse dans le réacteur lorsque celui-ci s'est condensée. Dans le cas où le peroxyde d'hydrogène est récupéré de manière gazeuse, on peut le condenser à l'aide d'un réfrigérant en sortie de réacteur. Dans le cas où la solution d'eau oxygénée est condensée dans le réacteur, on peut la sous-tirer de manière continue ou discontinue.

Les gaz résiduels n'ayant pas réagi sont avantageusement récupérés en sortie de réacteur pour être réinjectés.

L'invention porte également sur le peroxyde d'hydrogène directement obtenu par le procédé selon l'invention.

Le procédé selon la présente invention permet d'obtenir des solutions de peroxyde d'hydrogène avec un excellent rendement et une très bonne sélectivité.

A titre non limitatif, les exemples suivants illustrent les avantages de la présente invention.

### Exemple

Le réacteur utilisé pour la fabrication de peroxyde d'hydrogène est un réacteur vertical à décharge couronne tel que décrit à la Figure 1 muni d'un système de 2 barrières diélectriques en verre Pyrex® sur chacune des électrodes. L'électrode centrale en cuivre est recouverte par une gaine en verre Pyrex® (1ère barrière diélectrique) et est reliée au générateur haute tension. La contre-électrode, qui est reliée à la masse, est une électrode double paroi en verre Pyrex® (2nde barrière diélectrique) dans laquelle circule une solution de NaCl de concentration fixée à 20g/l. Cette solution saline est thermostatée. La zone plasma a une hauteur de 170mm, avec une distance inter-électrode de 2,5mm. On remplit la zone plasma de fibres de quartz non-tissées de quartz recouvertes de $TiO_2$ ayant une surface spécifique de 40 $m^2$/g. Le mélange de gaz est introduit en continu en haut du réacteur. Le mélange de gaz est en excès d'hydrogène et a pour composition 97,75%vol d'hydrogène et 2,25%vol d'oxygène et est introduit à l'aide de débitmètres Brooks 5850-S. L'énergie spécifique appliquée au gaz pour former le plasma est de 500J /L. Après passage dans la zone plasma, on récupère le peroxyde d'hydrogène et l'eau après passage dans un condenseur en bas du réacteur.

On dose le nombre de moles de peroxyde d'hydrogène ainsi formé selon la méthode titrimétrique décrite dans le document « CEFIC PEROXYGENS $H_2O_2$ AM-7157 ». On dose également le gaz résiduel pour déterminer la quantité de moles d'oxygène résiduel à l'aide d'un spectromètre de masse ; on peut ainsi déterminer la quantité d'oxygène consommé.

Le rendement et la sélectivité en peroxyde d'hydrogène sont calculés de la manière suivante :

$$\text{Rendement = nombre de moles de } H_2O_2 \text{ recueillies / nombre de moles de } O_2 \text{ introduites.}$$

$$\text{Sélectivité = nombre de moles de } H_2O_2 \text{ recueillies / nombre de moles de } O_2 \text{ consommées.}$$

Dans le Tableau 1 sont reportés les rendements et les sélectivités en fonction de la température de la contre-électrode thermostatée par la solution saline.

Tableau 1

|  | Température (°C) | Rendement (%) | Sélectivité (%) |
|---|---|---|---|
| conforme à l'invention | 5 | 7,57 | 61,52 |
|  | 7 | 4,37 | 35,45 |
|  | 10 | 3,40 | 27,72 |
|  | 14 | 0,73 | 6,58 |
| hors invention | 20 | 0,05 | 0,55 |
|  | 30 | 0,02 | 0,27 |
|  | 40 | 0,02 | 0,17 |
|  | 50 | 0,01 | 0,11 |

## Revendications

1. Procédé de fabrication du peroxyde d'hydrogène comprenant une étape au cours de laquelle un mélange gazeux comprenant de l'hydrogène et de l'oxygène est activé dans un réacteur plasma froid, **caractérisée en ce que** au moins une partie du réacteur est refroidie à une température inférieure à 15°C.

2. Procédé selon la revendication 1 **caractérisé en ce que** la température de la partie refroidie du réacteur est comprise dans la gamme allant de -10 à 10°C.

3. Procédé selon l'une des revendications précédentes **caractérisé en ce que** le mélange gazeux comprend de la vapeur d'eau.

4. Procédé selon l'une des revendications précédentes **caractérisé en ce que** l'énergie spécifique appliquée au gaz dans le réacteur est compris dans la gamme allant de 125 à 3000J/L.

5. Procédé selon l'une des revendications précédentes **caractérisé en ce que** le réacteur plasma est un réacteur plasma à décharge.

6. Procédé selon la revendication 5 **caractérisé en ce que** le réacteur plasma est un réacteur plasma à décharge à barrière diélectrique.

7. Procédé selon la revendication 6 **caractérisé en ce que** le réacteur plasma à décharge à barrière diélectrique comprend une électrode à double enveloppe dans laquelle circule une solution réfrigérée à une température inférieure à 15°C.

8. Procédé selon l'une des revendications précédentes **caractérisé en ce que** le réacteur comprend un solide faiblement conducteur sous forme de poudre, de grains ou de fibres, de préférence des fibres de quartz.

9. Procédé selon l'une des revendications précédentes **caractérisé en ce que** la composition du mélange de l'étape d'activation est constituée d'une teneur en hydrogène inférieure à 3,2 % en volume.

10. Procédé selon l'une des revendications 1 à 8 **caractérisé en ce que** la composition du mélange de l'étape d'activation est constituée d'une teneur en oxygène inférieure à 5 % en volume.

**Patentansprüche**

1. Verfahren zur Herstellung von Wasserstoffperoxid, einen Schritt umfassend, in dessen Verlauf ein Gasgemisch, welches Wasserstoff und Sauerstoff umfasst, in einem Kaltplasmareaktor aktiviert wird, **dadurch gekennzeichnet, dass** wenigstens ein Teil des Reaktors auf eine Temperatur unter 15 °C gekühlt wird.

2. Verfahren nach Anspruch 1, **dadurch gekennzeichnet, dass** die Temperatur des gekühlten Teils des Reaktors in dem Bereich von -10 bis 10 °C liegt.

3. Verfahren nach einem der vorhergehenden Ansprüche, **dadurch gekennzeichnet, dass** das Gasgemisch Wasserdampf umfasst.

4. Verfahren nach einem der vorhergehenden Ansprüche, **dadurch gekennzeichnet, dass** die spezifische Energie, die dem Gas in dem Reaktor zugeführt wird, in dem Bereich von 125 bis 3000 J/L liegt.

5. Verfahren nach einem der vorhergehenden Ansprüche, **dadurch gekennzeichnet, dass** der Plasmareaktor ein Plasmaentladungsreaktor ist.

6. Verfahren nach Anspruch 5, **dadurch gekennzeichnet, dass** der Plasmareaktor ein Plasmaentladungsreaktor mit dielektrischer Barriere ist.

7. Verfahren nach Anspruch 6, **dadurch gekennzeichnet, dass** der Plasmaentladungsreaktor mit dielektrischer Barriere eine Elektrode mit Doppelmantel umfasst, in welchem eine Lösung zirkuliert, die auf eine Temperatur unter 15 °C gekühlt wird.

8. Verfahren nach einem der vorhergehenden Ansprüche, **dadurch gekennzeichnet, dass** der Reaktor einen schwach leitenden Feststoff in Form von Pulver, von Körnern oder von Fasern umfasst, vorzugsweise von Quarzfasern.

9. Verfahren nach einem der vorhergehenden Ansprüche, **dadurch gekennzeichnet, dass** die Zusammensetzung des Gemischs des Aktivierungsschrittes einen Gehalt an Wasserstoff beinhaltet, der weniger als 3,2 Vol.-% beträgt.

10. Verfahren nach einem der Ansprüche 1 bis 8, **dadurch gekennzeichnet, dass** die Zusammensetzung des Gemischs des Aktivierungsschrittes einen Gehalt an Sauerstoff beinhaltet, der weniger als 5 Vol.-% beträgt.

**Claims**

1. A process for the manufacture of hydrogen peroxide comprising a stage during which a gas mixture comprising hydrogen and oxygen is activated in a cold plasma reactor, **characterized in that** at least a part of the reactor is cooled to a temperature of less than 15°C.

2. The process as claimed in claim 1, **characterized in that** the temperature of the cooled part of the reactor is within the range extending from -10 to 10°C.

3. The process as claimed in either of the preceding claims, **characterized in that** the gas mixture comprises water vapor.

4. The process as claimed in one of the preceding claims, **characterized in that** the specific energy applied to the gas in the reactor is within the range extending from 125 to 3000 J/l.

5. The process as claimed in one of the preceding claims, **characterized in that** the plasma reactor is a discharge plasma reactor.

6. The process as claimed in claim 5, **characterized in that** the plasma reactor is a dielectric barrier discharge plasma reactor.

7. The process as claimed in claim 6, **characterized in that** the dielectric barrier discharge plasma reactor comprises an electrode comprising a jacket within which circulates a solution cooled to a temperature of less than 15°C.

8. The process as claimed in one of the preceding claims, **characterized in that** the reactor comprises a weakly conducting solid in the form of a powder, grains or fibers, preferably quartz fibers.

9. The process as claimed in one of the preceding claims, **characterized in that** the composition of the mixture of the activation stage is composed of a hydrogen content of less than 3.2% by volume.

10. The process as claimed in one of claims 1 to 8, **characterized in that** the composition of the mixture of the activation stage is composed of an oxygen content of less than 5% by volume.

2

5

4

3

1

**FIGURE 1**

EP 2 352 699 B1

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5194242 A
- US 5641467 A
- WO 2008025917 A
- US 2022650 A

**Littérature non-brevet citée dans la description**

- **B.K. MORINAGA.** *Bull-Chem. Soc.,* 1962, vol. 32, 345
- **J. ZHOU et al.** *Chem. Commun.,* 2005, 1631-1633
- **B. DODET et al.** *J. Adv. Oxid. Technol.,* 2005, vol. 8 (1
- **S. BRUNAUER ; P. H. EMMETT ; E. TELLER.** Adsorption of gases on multimolecular Layers. *Journal of American Chemical Society,* 1938, vol. 60, 309-319